# EUROPÄISCHE PATENTSCHRIFT

(11) **EP 1 850 453 B1**
(45) Veröffentlichungstag und Bekanntmachung des Hinweises auf die Patenterteilung: **18.09.2013**
(21) Anmeldenummer: 07008288.8
(22) Anmeldetag: 24.04.2007
(51) Int. Cl.: H02K 1/27

(54) **Permanentmagnetrotor**
Permanent magnet rotor
Rotor à aimant permanent

(30) Priorität: 28.04.2006 DE 102006021244
(43) Veröffentlichungstag der Anmeldung: 31.10.2007
(73) Patentinhaber: Bühler Motor GmbH, 90459 Nürnberg (DE)
(72) Erfinder: Ihle, Olai, 90542 Eckental (DE); Peterreins, Thomas, 90475 Nürnberg (DE); Schmidt, Helmut, 90765 Fürth (DE); Suttner-Reimann, Armin, 91126 Schwabach (DE)

(56) Entgegenhaltungen:
- WO-A-99/12248
- DE-A1- 2 328 886
- FR-A- 2 542 519
- JP-A- 56 157 249
- US-A- 5 930 071
- US-A1- 2004 045 154

## Beschreibung

Die Erfindung betrifft einen Permanentmagnetrotor mit einer Welle, einem hohlzylindrischen Permanentmagneten und einem elastischem Verbindungsmittel zwischen der Welle und dem Permanentmagneten, wobei der Permanentmagnet koaxial um die Welle herum angeordnet ist, das elastische Verbindungsmittel über den Umfang der Welle in mehreren ersten Bereichen angeordnet ist, in denen der Abstand zwischen der Welle und dem Permanentmagneten vergrößert ist, die von zweiten Bereichen abgegrenzt sind, in denen der Abstand zwischen der Welle und dem Permanentmagneten minimal aber nicht null ist.

Aus der US 2004/0045154 A1 ist ein gattungsgemäßer Permanentmagnetrotor bekannt, bei dem das elastische Verbindungsmittel dazu dient Vibrationen und Schwingungen zu dämpfen. Da der Abstand zwischen dem Permanentmagnetring und der Rotorwelle, auch in den Bereichen mit minimalem Abstand, noch groß genug ist, um bei äußeren Stoßbelastungen ein Auslenken des Permanentmagneten gegenüber der Rotorwelle zu bewirken, darf das Material des elastischen Verbindungsmittels nicht zu weich gewählt sein, um noch eine ausreichende Stabilität zu gewährleisten. Deshalb kann keine optimale Dämpfungswirkung erzielt werden.

Die US 5,930,071 beschreibt einen Antrieb für ein Festplattenlaufwerk, bei dem eine Vielzahl von Bauteilen mit einer Schicht aus einem elastomerähnlichen Material versehen sind, die schwingungsdämpfend wirken soll.

Ein gattungsgemäßer Permanentmagnetrotor ist aus der DE 23 28 886 bekannt. Hierbei wird ein hohlzylindrischer Permanentmagnet mit Hilfe einer elastischen Zwischenlage befestigt. Die radiale Dicke der elastischen Zwischenlage ist dabei so bemessen, dass der Permanentmagnet beim plötzlichen Abbremsen der Motorwelle in Umfangsrichtung schwingen kann, dadurch soll eine Beschädigung eines nachgeordneten Getrieberitzels vermieden werden. Bei anderen Anwendungen, bei denen große Temperaturschwankungen auftreten können sind elastische Zwischenlagen hilfreich um mechanische Spannungen zwischen Materialien unterschiedlicher Wärmeausdehnung zu vermeiden. Durch eine elastische Zwischenlage allein lässt sich aber eine feste mechanische Verbindung der Welle mit dem Permanentmagneten über die gesamte Lebensdauer nicht zuverlässig sicherstellen.

Ein weiterer Nachteil besteht darin, dass die Rundlaufgenauigkeit bei radialer Belastung nicht ausreichend sein kann, weil das elastische Material nachgiebig ist. Auch darf das Material unter Feuchtigkeitseinfluss nicht quellen. Das Quellen könnte zur Sprengung des Permanentmagneten führen.

Aufgabe der Erfindung ist es dafür Sorge zu tragen, dass der Permanentmagnet bei großer radialer Belastung nicht unzulässig aus der Drehachse ausgelenkt wird, wobei ein einfaches und wirtschaftliches Montageverfahren verwendet wird und eine sichere mechanische Verbindung zwischen der Welle und dem Permanentmagneten über die gesamte Lebensdauer gewährleistet ist.

Die Erfindung ist durch die Merkmale der unabhängigen Ansprüche definiert. Die Aufgabe wird erfindungsgemäß dadurch gelöst, dass die zweiten Bereiche, in denen der Abstand zwischen der Welle und dem Permanentmagneten minimal ist, so dimensioniert ist, dass ein geringfügiger Längenausdehnungsausgleich des Wellenmaterials gegenüber dem Permanentmagnetmaterial möglich ist, aber eine unerwünscht große Auslenkung des Permanentmagneten in Bezug auf die Welle oder eines den Permanentmagneten in geringem Abstand umgebenden Bauteils ausgeschlossen wird und das elastische Verbindungsmittel (53) in mehreren achsparallelen Nuten (511) oder in mäanderförmigen oder spiralförmigen Nuten um die Welle (51) herum angeordnet ist. Die Bereiche mit größerem Abstand dienen zur sicheren Aufnahme des elastischen Verbindungsmittels und die Bereiche mit geringerem Abstand lassen nur eine begrenzte Auslenkung des Permanentmagneten in Bezug auf die Welle oder einem den Permanentmagneten umgebenden Teil zu. Dies erhöht die Rundlaufgenauigkeit auch unter erhöhter radialer Belastung. Die Bereiche mit geringerem Abstand können unter Temperatur- oder Druckbelastung oder bei der Montage auftretende Volumenänderungen des elastischen Verbindungsmittels in begrenztem Umfang aufnehmen und dadurch Spannungen im Magnetmaterial vermeiden. Als Welle (51) wird hier und nachfolgend auch ein Rotorkörper bezeichnet, der einstückig mit dem Pumpenlaufrad ist und der den Permanentmagneten trägt. Das elastische Verbindungsmittel (53) soll dabei in mehreren achsparallelen Nuten (511) oder in mäanderförmigen oder spiralförmigen Nuten um die Welle (51) herum angeordnet sein. Dabei kann es sich um ein oder mehrere Nuten handeln. Wichtig ist, dass das elastische Verbindungsmittel nicht vollflächig aufgetragen wird und dass keine Luftkissen entstehen.

Bevorzugte Ausgestaltungen der Erfindung sind in den abhängigen Ansprüchen definiert.

Das elastische Verbindungsmittel (53) ist vorzugsweise ein elastischer Klebstoff. Der Klebstoff stellt eine stoffschlüssige Verbindung zwischen der Welle (51) und dem Permanentmagneten (52) her, wodurch eine dauerhafte innige Verbindung zwischen den beiden Teilen sichergestellt ist. Silikon hat sich als geeigneter Klebstoff mit ausreichenden elastischen Eigenschaften herausgestellt. Geignet sind auch RTV-1-Siliconkautschuke der Reihe ELASTOSIL^{®}, die mit der Feuchtigkeit der Luft zu einem elastischen Silicongummi reagieren (RTV-1 = Raum-Temperatur-Vernetzung 1-komponentig).

Es wird weiter vorgeschlagen dass die Anzahl der Nuten (511) ungleich der halben oder ungleich der ganzen Polzahl des Permanentmagneten ist. Zudem ist es zweckmäßig, dass die Anzahl der Nuten (511) ungleich der Anzahl der Flügel eines Pumpenlaufrades ist. Durch diese Maßnahmen wird eine Minimierung der Geräuschentwicklung erreicht. Um eine stabile Verbindung herzustellen ist es vorteilhaft, dass die Anzahl der Nuten (511) größer oder gleich drei ist, wobei drei Nuten bevorzugt werden. Wichtig ist, dass die Nuten in gleichmäßigen Abständen um den Umfang der Welle verteilt sind, um eine genaue Zentrierung der Welle in Bezug auf den Permanentmagneten zu erreichen. "Flügel" sind gleichbedeutend mit "Schaufeln".

Damit eine möglichst robuste und mechanisch Stabile Verbindung hergestellt wird sollte sich das elastische Verbindungsmittel über die volle Länge des Permanentmagneten verteilen.

Die vorgeschlagene Magnetbefestigung kann im Grunde bei allen Permanentmagnet-Werkstoffen eingesetzt werden. Besonders zweckmäßig ist es diese Verbindungsart bei der Verwendung von Ferritmagneten zu wählen, weil Ferrite besonders spröde und bruchanfällig insbesondere bei thermischen oder sonstigen mechanischen Spannungen sind.

Für eine Vielzahl von Anwendungen ist es wirtschaftlich sinnvoll die Welle aus spritzgusstechnisch verarbeitbarem Kunststoffmaterial herzustellen. Die vorgeschlagene Geometrie der Welle eignet sich für diese Fertigungsart insbesondere wegen der fehlenden Hinterschneidungen, die bei quer angeordneten Nuten unvermeidlich wären.

Es wird vorgeschlagen die Welle (51) hohl auszubilden und auf einer Achse (49) drehbar zu lagern.

Elektromotoren sind der häufigste Anwendungsfall für die vorliegende Erfindung. In diesem Fall wird eine unerwünscht große Auslenkung in Bezug auf einen Stator (40) ausgeschlossen, wenn das Verhältnis (UA) der Luftspaltlänge (L) zwischen Permanentmagnetrotor (50) und dem Stator (40) und dem minimalen Abstand (A) des zweiten Bereichs (542) zwischen der Welle (51) und dem Permanentmagneten (52) größer als 1 ist. Auf diese Weise ist der Permanentmagnet nur in innerhalb der erlaubten Grenzen auslenkbar.

Der Permanentmagnetrotor (50) weist ein Festlager (54) auf, das achsen- oder rotorfest ist. In der Regel wird das Festlager rotorfest sein, damit die Lagerfläche einen geringen Reibradius aufweist.

In einer bevorzugten Weiterentwicklung des Festlagers (54), besteht dieses aus einem spritzgusstechnisch verarbeitbarem Kunststoffmaterial und ist durch Urformen mit dem Permanentmagnetrotor (50) gefügt. Das Lagermaterial ist in diesem Fall durch Ein- An- oder Umspritzen mit dem Permanentmagnetrotor (50) verbunden. Ist es erforderlich ein spezielles Lagermaterial einzusetzen, das aus wirtschaftlichen oder technischen Gründen nicht für den Permanentmagnetrotor (50) verwendet werden soll, verwendet man unterschiedliche für den jeweiligen Zweck angepasste Kunststoffe. Sind diese Aspekte von untergeordneter Bedeutung kann für den Permanentmagnetrotor und das Festlager (54) auch das gleiche Kunststoffmaterial verwendet werden und beide in einem Arbeitsgang hergestellt werden.

Es kann erforderlich sein, das Festlager (54) aus einem abriebfesteren Kunststoffmaterial oder aus einem Material mit besseren Gleiteigenschaften auszubilden als das Wellenmaterial. Um die Gleiteigenschaften zu verbessern eignen sich auch Füllstoffe, wie Graphit. Graphit ist als Festschmierstoff bekannt.

Bei der Verwendung von unterschiedlichen Materialien für das Festlager (54) und für die Welle (51) lässt sich ein Zweikomponenten-Spritzgussverfahren einsetzen, wobei das Festlager (54) und die Welle in einem Spritzgusswerkzeug nacheinander hergestellt werden.

Eine besondere Ausführungsform eines Elektromotors beinhaltet einen Permanentmagneten, der neben einer ersten mit einem Statormagnetfeld zusammenwirkenden radialen Magnetisierung eine zweite mit einem statorfesten Magnetsensor zusammenwirkende axiale Magnetisierung aufweist. Dabei ist der Permanentmagnet einstückig ausgebildet.

Elektromotoren mit dem erfindungsgemäßen Permanentmagnetrotor (50) eignen sich insbesondere für den Einsatz als Pumpenantriebe, wobei die Welle (51) mit einem Pumpenlaufrad (59) zusammenwirkt. Bevorzugt ist die Welle einstückig mit dem Pumpenlaufrad. Es ist zwar bekannt den gesamten Pumpenrotor, also Permanentmagnet und Pumpenlaufrad aus einem Material und in einem Arbeitsgang herzustellen, doch auf diese Weise wird mehr Permanentmaterial verbraucht als notwendig wäre. Dies wirkt sich auch auf das Gewicht und das Trägheitsmoment des Pumpenrotors aus. Weiterhin hat sich gezeigt, dass solche einstückigen Pumpenrotoren bei extremen Temperaturschwankungen bersten können, obwohl es sich um kunststoffgebundenes Permanentmaterial handelt.

Die genannten Temperaturschwankungen treten häufig bei Nassläufer-Kreiselpumpen für Kühlwasserpumpen im Kfz-Bereich auf. Je nach Anwendungsfall ist das Kühlmedium geeignet auch die Pumpe selbst zu kühlen. Zu kühlende Bauteile sind der Stator, insbesondere eine Statorwicklung oder bei elektronisch kommutierten Gleichstrommotoren der integrierte Schaltkreis (IC) für die Umschaltung der Statorwicklung.

Ein Ausführungsbeispiel der Erfindung wird nachfolgend anhand der Zeichnung näher erläutert. Es zeigen:
Fig.1 eine räumliche Darstellung eines Rotors,
Fig. 2 eine Stirnansicht des Rotors,
Fig. 3 eine Seitenansicht des Rotors,
Fig. 4 eine Stirnansicht eines Pumpenlaufrads und
Fig. 5 eine Zusammenbauzeichnung einer Kreiselpumpe.

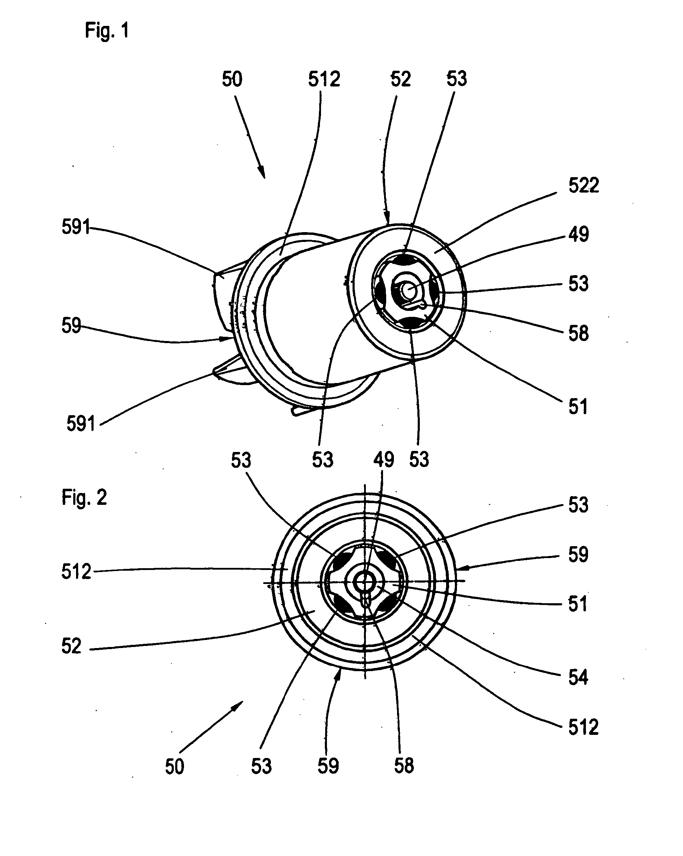

Fig. 1 zeigt eine räumliche Darstellung eines Rotors 50, der über ein Festlager 54 auf einer Achse 49 gelagert ist. Das Lager ist fest mit einer als Hohlwelle ausgebildeten Welle 51 verbunden. Die Welle 51 weist an ihrem Außenumfang vier achsparallele Nuten 511 auf. In den Nuten ist ein elastisches Verbindungsmittel 53 angeordnet, das eine Verbindung zwischen der Welle 51 und einem hohlzylindrischen Permanentmagneten 52 herstellt. Das Verbindungsmittel ist hier ein elastischer Klebstoff, z.B. Silikon. Der Innendurchmesser des Permanentmagneten 52 ist geringfügig größer als der maximale Außendurchmesser der Welle 51 im Bereich innerhalb des Permanentmagneten 52. Der Durchmesserunterschied ist so bemessen, dass einerseits überschüssiger Kleber in den Spalt zwischen Weile 51 und Permanentmagnet 52 ausweichen kann, dass bei äußerer Belastung zwar eine geringe Abweichung des Permanentmagneten 52 aus der Mittenlage möglich ist, diese Abweichung aber eng begrenzt ist. Der Klebstoff wird mit Hilfe von Hohlnadeln in die Nuten eingebracht. Die Welle 51 ist einstückig mit einem Pumpenlaufrad 59, das mit Flügel 591 aufweisen, Wobei die Flügel 591 aus einer Scheibe 512 vorspringen. Die gegenüberliegende Seite der Scheibe 512 dient als Anlagefläche für den Permanentmagneten 52. Auf der Welleninnenseite ist eine zum Lager und zur Achse 49 offene Längsnut 58 vorgesehen, die als sekundärer Kühlkanal dient.

Fig. 2 zeigt eine Stirnansicht des erfindungsgemäßen Permanentmagnetrotor 50, mit der Achse 49, die in einem Pumpengehäuse befestigt ist, das Festlager 54, die Welle 51, die einstückig mit dem Pumpenlaufrad 59 ist. Das Pumpenlaufrad ist einstückig mit der Scheibe 512, an der der Permanentmagnet 52 anliegt.

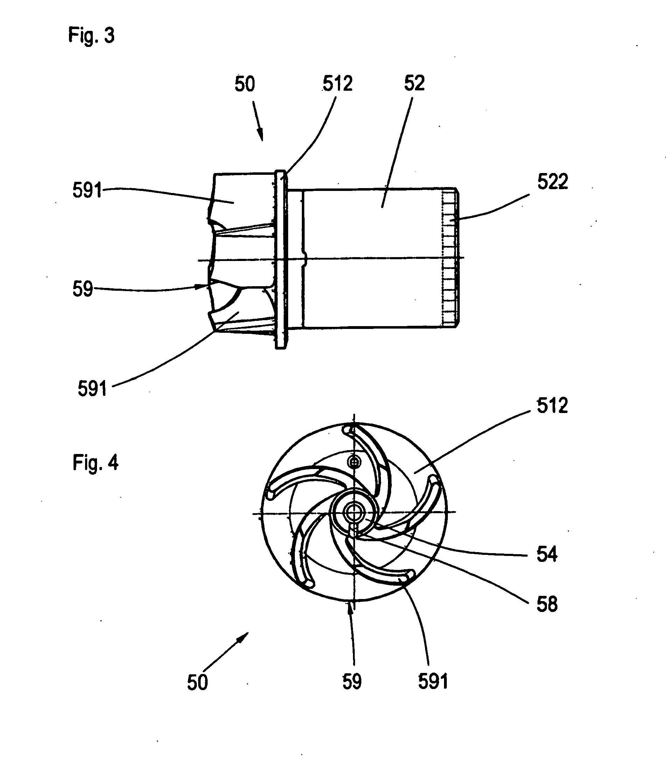

Fig. 3 zeigt eine Seitenansicht des erfingungsgemäßen Permanentmagnetrotors 50, mit dem Pumpenlaufrad 59, den Flügeln 591, der Scheibe 512 und dem Permanentmagneten 52, wobei der Permanentmagnet an einem Stirnseitenbereich eine axiale Sensorspur-Magnetisierung 522 mit alternierender Polung aufweist. Der Permanentmagnet ist bei seiner Herstellung radial vorzugsmagnetisiert worden. Die axiale Sensorspur-Magnetisierung 522 ist erst nach der Magnetisierung des Permanentmagneten 52 erfolgt.

Fig. 4 zeigt eine Stirnansicht des Pumpenlaufrades 59 mit der Scheibe 512, den Flügeln 591, dem Festlager 54 und der Längsnut 58.

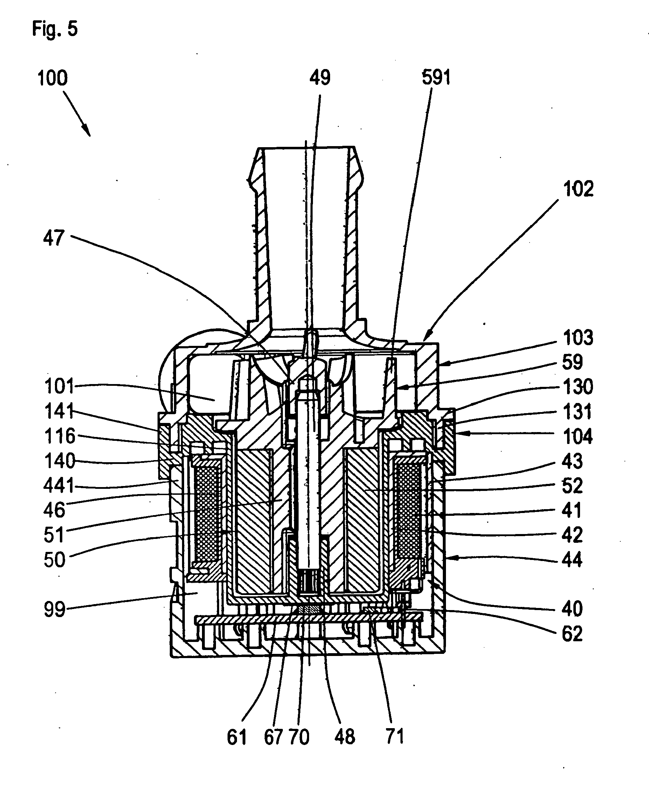

Fig. 5 zeigt eine Schnittansicht durch eine erfindungsgemäße Kreiselpumpe 100, mit einem Pumpengehäuse 102, bestehend aus einem ersten Gehäuseteil 103 und einem daran anschließenden zweiten Gehäuseteil 104. Ein Motorgehäuseteil 44 begrenzt einen Trockenraum, der von einem Stator (40) eines elektronisch kommutierten Gleichstrommotors und seiner Ansteuerelektronik ausgefüllt wird. Das Motorgehäuseteil 44 schließt an das zweite Gehäuseteil 102 and. Das erste und das zweite Gehäuseteil 103, 104 begrenzen einen Nassraum 101 der Kreiselpumpe. Das zweite Gehäuseteil 104 ist einstückig mit einem Spalttopf 116 geformt, welcher den Nassraum 101 von einem Trockenraum 99.

Der Nassraum 101 enthält eine Achse 49, die zwischen einer spalttopfseitigen Achsaufnahme 48 und einer saugstutzenseitigen Achsaufnahme 47 fest eingebaut ist. Eine Rändelung am Achsenende verhindert eine Verdrehung der Achse 49 während des Pumpenbetriebs. Auf der Achse 49 ist ein Festlager 54 (hier nicht dargestellt) drehbar gelagert, welches in einer hohlen Welle 51 des Rotors 50 eingepresst ist. Die Welle 51 ist einstückig mit einem Pumpenlaufrad 59, das mehrere etwa spiralförmig geformte Flügel 591 für die Flüssigkeitsförderung enthält. Die Stirnflächen des Festlagers 54 können sich axial unter Zwischenlage von Anlaufscheiben gegen die spalttopfseitige Achsaufnahme 48 und gegen die saugstutzenseitige Achsaufnahme 47 abstützen. Ein hohlzylindrischer Ferritmagnet 52 ist auf die hohle Welle 51 aufgeklebt, wobei ein elastischer Kleber verwendet wird, der in vier oder fünf in die Hohlwelle geformte achsparallele Nuten 511 (hier nicht dargestellt) eingebracht ist.

Der Trockenraum 99 enthält den Stator 40 des elektronisch kommutierten Gleichstrommotors 10, der in Form einer hohlzylindrischen Statorwicklung 41 ausgebildet ist, wobei deren Magnetfeld im Betrieb über Klauenpole 42 in alternierende Weise an den Umfang des Spalttopfs 116 geführt wird und mit dem hohlzylindrsichen Permanentmagneten 52 im Nassraum 101 wechselwirkt. Der magnetische Kreis wird durch einen Rückschlussring 43, der mit den Klauenpolen 42 verbunden ist, geschlossen. Die Klauenpole 42 sind durch Umspritzen mit einem Isolierstoffkörper 46 versehen, der die Klauenpole 42 mechanisch aber nicht magnetisch miteinander verbindet. Der Stator 40 weist im vorliegenden Beispiel vier Polpaare auf. Der Isolierstoffkörper 46 ist geometrisch so geformt, dass die Wicklungsdrähte der Statorwicklung 41 mit Klemmschneidkontakte aufweisende Kontaktpins 62 verbindbar sind, wobei diese Klemmschneidkontakte im Isolierstoffkörper 46 mechanisch befestigbar sind. Die Kontaktpins 62 sind als Kombi-Kontakte geformt und an ihrem dem Klemmschneidkontakt 63 gegenüberliegenden Ende in eine Leiterplatte 61 eingepresst und dadurch mit dieser kontaktiert. Die Kontaktpins 62 enthalten hierfür ein oder zwei verformbare Einpresszonen. Die Leiterplatte 61 enthält einen Hall-Sensor 71, eine integrierte Schaltung 70 für die Beschaltung der Statorwicklung, einen PTC für den Wicklungsschutz und Steckerpins für die Spannungsversorgung. Das Motorgehäuseteil 44 beinhaltet ein Steckergehäuse (hier nicht dargestellt) in welchem die Steckerpins 64 angeordnet sind. Elektronische Bauteile mit großer Verlustwärme werden über Wärmeleitfolien 67 zum Nassraum 101 hin entwärmt. Leiterbahnen, die zur Kontaktierung von zu kühlenden Bauelementen dienen, sind so dimensioniert, dass zur leichteren Wärmeabfuhr möglichst breite Leiterbahnen 66 auf der Leiterplatte 61 vorgesehen sind. Um eine besonders gute Ausnutzung der Leiterplatte 61 und eine optimale Wärmeabfuhr zu erreichen, sind die unterschiedlichen Leiterbahnen 66 unterschiedlich breit ausgeführt, je nach dem wie viel Wärme in dem zu kontaktierenden Bauteileanschluss entsteht. In der Welle 51 ist eine Längsnut als Kühlkanal zwischen einem Boden 117 des Spalttopfs 116 und dem Pumpenlaufrad 59 eingeformt, der eine kontinuierliche Umwälzung des Fördermediums auch im Innenbereich des Spalttopfs 116 erzwingt. Die Leiterplatte ist zwischen einer Stirnseite 45 des Motorgehäuses 44 und dem Boden 117 des Spalttopfs 116 angeordnet und über die Wärmeleitfolie 67 in wärmeleitendem Kontakt mit dem Boden 117 gehalten.

Das erste Gehäuseteil 103 weist einen ersten Flansch 130 und einen ersten daran anschließenden Ring 131 auf. Das zweite Gehäuseteil 104 weist einen zweiten Flansch 140 und einen zweiten daran anschließenden Ring 141 auf. Das Motorgehäuseteil weist einen dritten Ring 441 auf. Der zweite Flansch 140 und der zweite Ring 141 bilden im Querschnitt zusammen eine T-Form. Es sind vier Dichtungsbereiche vorgesehen. Der erste Dichtungsbereich befindet sich auf der radial außen liegenden Seite des ersten Rings 131 am ersten Gehäuseteil 103. Gegenüberliegend auf der radial innen liegenden Seite des zweiten Rings 141 und des zweiten Gehäuseteils 104 befindet sich der zweite Dichtungsbereich 144. Ebenfalls auf der radial innen liegenden Seite des zweiten Rings 141 und des zweiten Gehäuseteils 104 befindet sich der dritte Dichtungsbereich. Diesem gegenüberliegend auf der radial außen liegenden Seite des dritten Rings 441 und des Motorgehäuseteils 44 befindet sich der vierte Dichtungsbereich. Das zweite Gehäuseteil 104 besteht aus einem für Laserlicht einer Wellenlänge oder eines Wellenlängenbereichs durchlässiges Material. Das erste Gehäuseteil 103 und das Motorgehäuseteil 44 bestehen aus einem dasselbe Laserlicht absorbierendem Material. Dadurch lässt sich ein Laserstrahl ohne Erwärmung des transparenten Materials bis zu einer Nahtstelle führen. Dort trifft der Strahl auf Material, das das Licht absorbiert und in Wärme umwandelt, wodurch der Kunststoff aufschmilzt und eine innige Verbindung mit dem benachbarten Material eingeht.

Da die beiden zu verschweißenden Dichtungsbereiche nahe beieinander liegen ist es ohne Schwierigkeiten möglich die beiden Nähte in einer Vorrichtung und in einem Arbeitsgang herzustellen. Die Schweißvorrichtung kann zwei einzelne Laser aufweisen, wobei mit jeweils einem Laserstrahl eine Schweißnaht hergestellt wird oder sie kann einen einzigen Laser aufweisen, dessen Ausgangsstrahl durch einen Strahlteiler in zwei Strahlenbündel geteilt wird, von denen jeder eine der Schweißnähte erzeugt. Im vorliegenden Beispiel werden die Laserstrahlen radial auf das Pumpengehäuse gelenkt.

### Bezugszeichenliste

- 10: Elektromotor
- 20: Luftspalt
- 40: Stator
- 41: Statorwicklung
- 42: Klauenpol
- 420: ringscheibenförmige Statorbleche
- 421: Ende
- 422: Aussparung
- 423: Steg
- 424: Luftspalt
- 43: Rückschlussring
- 430: Blechbrücke
- 431: Schlitz
- 432: Verbindungsschlitz
- 433: offener Schlitz
- 434: Freisparung
- 435: erster Rand
- 436: zweiter Rand
- 437: Nahtstelle
- 438: Verbindungsmittel
- 439: Blechzunge
- 44: Motorgehäuse
- 45: Stirnseite (des Motorgehäuses)
- 46: Isolierstoffkörper
- 461: Aufnahmeschlitz
- 462: Montageausnehmung
- 463: Befestigungsmittel
- 464: Anschlag
- 465: Schnappmittel
- 466: Vorsprung
- 467: Halterung (für Steckerpin)
- 47: saugstutzenseitige Achsaufnahme
- 48: spalttopfseitige Achsaufnahme
- 49: Achse
- 50: Rotor
- 51: Welle
- 511: Nut
- 512: Scheibe
- 52: hohlzylindrischer Permanentmagnet
- 521: Arbeitsmagnetisierung
- 522: Sensorspur-Magnetisierung
- 523: Stirnseite (des Permanentmagneten)
- 524: Sicherheitsspalt
- 53: elastisches Verbindungsmittel
- 531: erster Bereich (breit)
- 532: zweiter Bereich (schmal)
- 54: Festlager
- 58: Längsnut (für sekundären Flüssigkeitskreislauf)
- 59: Pumpenlaufrad
- 591: Flügel
- 60: Elektronik
- 61: Leiterplatte
- 611: Ausnehmungen
- 62: Kontaktpin
- 63: Klemmschneidkontakt
- 64: Steckerpin
- 641: Anformungen
- 65: Steckergehäuse
- 66: Leiterbahn
- 67: Wärmeleitfolie
- 70: Integrierter Schaltkreis (IC)
- 71: Hall-Sensor
- 99: Trockenraum
- 100: Kreiselpumpe
- 101: Nassraum
- 102: Pumpengehäuse
- 103: erstes Gehäuseteil
- 104: zweites Gehäuseteil
- 105: Saugstutzen
- 106: Druckstutzen
- 109: Pumpenraum
- 111: runde Kontur
- 112: Sporn
- 113: Übergangsbereich
- 114: Umfangswandung
- 115: scharfe Kante
- 116: Spalttopf
- 117: Boden
- 118: Rotorraum
- 119: Vertiefung
- 120: spiralförmige Innenkontur
- 121: Aufnahme
- 122: Pumpenbefestigungsmittel
- 123: Verrundung
- 130: erster Flansch
- 131: erster Ring
- 133: erster Dichtungsbereich
- 140: zweiter Flansch
- 141: zweiter Ring
- 144: zweiter Dichtungsbereich
- 145: dritter Dichtungsbereich
- 150: Schwalbenschwanzkontur
- 151: komplementäre Kontur
- 152: V-förmige Ausnehmung
- 441: dritter Ring
- 444: vierter Dichtungsbereich

## Patentansprüche

1. Permanentmagnetrotor (50) mit einer Welle (51), einem hohlzylindrischen Permanentmagneten (52) und einem elastischem Verbindungsmittel (53) zwischen der Welle (51) und dem Permanentmagneten (52), wobei der Permanentmagnet (52) koaxial um die Welle (51) herum angeordnet ist, das elastische Verbindungsmittel (53) über den Umfang der Welle in mehreren ersten Bereichen angeordnet ist, in denen der Abstand zwischen der Welle (51) und dem Permanentmagneten (52) vergrößert ist, die von zweiten Bereichen abgegrenzt sind, in denen der Abstand zwischen der Welle (51) und dem Permanentmagneten (52) minimal aber nicht null ist, **dadurch gekennzeichnet, dass** die zweiten Bereiche, in denen der Abstand zwischen der Welle (51) und dem Permanentmagneten (52) minimal ist, so dimensioniert ist, dass ein geringfügiger Längenausdehnungsausgleich des Wellenmaterials gegenüber dem Permanentmagnetmaterial möglich ist, aber eine unerwünscht große Auslenkung des Permanentmagneten (52) in Bezug auf die Welle oder eines den Permanentmagneten in geringem Abstand umgebenden Bauteils ausgeschlossen wird und das elastische Verbindungsmittel (53) in mehreren achsparallelen Nuten (511) oder in mäanderförmigen oder spiralförmigen Nuten um die Welle (51) herum angeordnet ist.

2. Permanentmagnetrotor nach Anspruch 1, **dadurch gekennzeichnet, dass** das Verbindungsmittel (53) ein elastischer Klebstoff ist.

3. Permanentmagnetrotor nach Anspruch 2, **dadurch gekennzeichnet, dass** der Klebstoff Silikon enthält oder aus Silikon besteht.

4. Permanentmagnetrotor nach Anspruch 3, **dadurch gekennzeichnet, dass** die Anzahl der Nuten (511) ungleich der halben oder ungleich der ganzen Polzahl des Permanentmagneten ist.

5. Permanentmagnetrotor nach Anspruch 3 oder 4, **dadurch gekennzeichnet, dass** die Anzahl der Nuten (511) ungleich der Anzahl der Flügel (591) eines Pumpenlaufrades ist.

6. Permanentmagnetrotor nach Anspruch 3, 4 oder 5, **dadurch gekennzeichnet, dass** die Anzahl der Nuten (511) größer oder gleich drei ist.

7. Permanentmagnetrotor nach Anspruch 3, 4, 5 oder 6, **dadurch gekennzeichnet, dass** die Nuten in gleichmäßigen Abständen über den Umfang der Welle (51) verteilt sind.

8. Permanentmagnetrotor nach zumindest einem der vorangehenden Ansprüche, **dadurch gekennzeichnet, dass** das elastische Verbindungsmittel (53) über die volle Länge des Permanentmagneten (52) verteilt ist.

9. Permanentmagnetrotor nach zumindest einem der vorangehenden Ansprüche, **dadurch gekennzeichnet, dass** der Permanentmagnet ein Ferritmagnet ist.

10. Permanentmagnetrotor nach zumindest einem der vorangehenden Ansprüche, **dadurch gekennzeichnet, dass** die Welle aus spritzgusstechnisch verarbeitbarem Kunststoffmaterial besteht.

11. Permanentmagnetrotor nach zumindest einem der vorangehenden Ansprüche, **dadurch gekennzeichnet, dass** die Welle (51) eine Hohlwelle ist, die auf einer Achse (49) drehbar gelagert ist.

12. Permanentmagnetrotor nach zumindest einem der vorangehenden Ansprüche, **dadurch gekennzeichnet, dass** der Permanentmagnetrotor (50) mit einem Festlager (54) drehfest ist.

13. Permanentmagnetrotor nach Anspruch 12, **dadurch gekennzeichnet, dass** das Festlager (54) aus einem spritzgusstechnisch verarbeitbarem Kunststoffmaterial besteht und durch Urformen mit dem Permanentmagnetrotor (50) gefügt ist.

14. Permanentmagnetrotor nach Anspruch 12 oder 13, **dadurch gekennzeichnet, dass** das Festlager (54) und eine Welle (51) des Permanentmagnetrotors (50) aus dem gleichen oder unterschiedlichem Material bestehen.

15. Permanentmagnetrotor nach Anspruch 13 oder 14, **dadurch gekennzeichnet, dass** das Festlager (54) aus einem abriebfesteren Kunststoffmaterial besteht, als die Welle (51).

16. Permanentmagnetrotor nach Anspruch 13, 14 oder 15, **dadurch gekennzeichnet, dass** das Festlager (54) mit Füllstoffen versehen ist, das die Gleitfähigkeit der Lagerung verbessert.

17. Permanentmagnetrotor nach Anspruch 16, **dadurch gekennzeichnet, dass** Graphit als Füllstoff dient.

18. Permanentmagnetrotor nach zumindest einem der Ansprüche 12 bis 17, **dadurch gekennzeichnet, dass** das Festlager (54) und die Welle (51) in einem Zweikomponenten-Spritzgussverfahren hergestellt ist, wobei das Festlager (54) und die Welle aus unterschiedlichen Kunststoffkomponenten bestehen.

19. Elektromotor (10) mit einem bewickelten Stator (40) und dem Permanentmagnetrotor (52) nach zumindest einem der vorangehenden Ansprüche

20. Elektromotor nach Anspruch 19, **dadurch gekennzeichnet, dass** das Verhältnis (UA) der Luftspaltlänge (L) zwischen Permanentmagnetrotor (50) und dem Stator (40) und dem minimalen Abstand (A) des zweiten Bereichs (532) zwischen der Welle (51) und dem Permanentmagneten (52) größer als 1 ist.

21. Elektromotor nach Anspruch 1 oder 19, **dadurch gekennzeichnet, dass** der Permanentmagnet (52) eine erste radiale Magnetisierung, dessen Magnetfeld mit einem Statormagnetfeld zusammenwirkt und eine zweite axiale Magnetisierung die mit einem statorfesten Magnetsensor zusammenwirkt, aufweist.

22. Kreiselpumpe (100) mit einem Elektromotor (10) nach Anspruch 1, 19 oder 20, **dadurch gekennzeichnet, dass** die Welle (51) mit einem Pumpenlaufrad (59) zusammenwirkt.

23. Kreiselpumpe nach Anspruch 22, **dadurch gekennzeichnet, dass** die Welle (51) mit dem Pumpenlaufrad (59) einstückig ist.

24. Kreiselpumpe nach Anspruch 22 oder 23, **dadurch gekennzeichnet, dass** die Kreiselpumpe eine Nassläuferpumpe (100) ist.

25. Kreiselpumpe nach Anspruch 22, 23 oder 24, **dadurch gekennzeichnet, dass** zwischen der Achse und der Welle (51) eine Längsnut (58) angeordnet ist die als Kanal für einen sekundären Flüssigkeitskreislauf zur Kühlung von elektronischen Bauteilen oder einer Statorwicklung (41) dient.

## Claims

1. A permanent magnet rotor (50) having a shaft (51), a hollow-cylindrical permanent magnet (52) and a resilient connecting means (53) between the shaft (51) and the permanent magnet (52), wherein the permanent magnet (52) is arranged coaxially around the shaft (51), the resilient connecting means (53) is arranged over the circumference of the shaft in a plurality of first regions, in which the distance between the shaft (51) and the permanent magnet (52) is increased, which are bounded by second regions, in which the distance between the shaft (51) and the permanent magnet (52) is minimal but not zero, **characterised in that** the second regions, in which the distance between the shaft (51) and the permanent magnet (52) is minimal, is dimensioned in such a manner that a slight linear expansion compensation of the shaft material with respect to the permanent magnet material is possible, however there is ruled out an undesirably large deflection of the permanent magnet (52) in relation to the shaft or of a structural part surrounding the permanent magnet at a slight distance therefrom, and the resilient connecting means (53) is arranged around the shaft (51) in a plurality of axially-parallel grooves (511) or in meander-shaped or spiral-shaped grooves.

2. A permanent magnet rotor according to claim 1, **characterised in that** the connecting means (53) is a resilient adhesive.

3. A permanent magnet rotor according to claim 2, **characterised in that** the adhesive contains silicone or is composed of silicone.

4. A permanent magnet rotor according to claim 3, **characterised in that** the number of grooves (511) is unequal to half the number of poles of the permanent magnet or unequal to the entire number of poles of the permanent magnet.

5. A permanent magnet rotor according to claim 3 or 4, **characterised in that** the number of grooves (511) is unequal to the number of the vanes (591) of a pump impeller.

6. A permanent magnet rotor according to claim 3, 4 or 5, **characterised in that** the number of grooves (511) is greater than or equal to three.

7. A permanent magnet rotor according to claim 3, 4, 5 or 6, **characterised in that** the grooves are distributed at uniform distances over the circumference of the shaft (51).

8. A permanent magnet rotor according to at least one of the preceding claims, **characterised in that** the resilient connecting means (53) is distributed over the entire length of the permanent magnet (52).

9. A permanent magnet rotor according to at least one of the preceding claims, **characterised in that** the permanent magnet is a ferrite magnet.

10. A permanent magnet rotor according to at least one of the preceding claims, **characterised in that** the shaft is composed of plastics material able to be worked by injection moulding.

11. A permanent magnet rotor according to at least one of the preceding claims, **characterised in that** the shaft (51) is a hollow shaft rotatably mounted on an axle (49).

12. A permanent magnet rotor according to at least one of the preceding claims, **characterised in that** the permanent magnet rotor (50) is fastened against relative rotation in relation to a fixed bearing (54).

13. A permanent magnet rotor according to claim 12, **characterised in that** the fixed bearing (54) is made of a plastics material able to be worked by injection moulding and is joined to the permanent magnet rotor (50) by primary shaping.

14. A permanent magnet rotor according to claim 12 or 13, **characterised in that** the fixed bearing (54) and a shaft (51) of the permanent magnet rotor (50) are made of the same material or different materials.

15. A permanent magnet rotor according to claim 13 or 14, **characterised in that** the fixed bearing (54) is made of a more abrasion-resistant plastics material than the shaft (51).

16. A permanent magnet rotor according to claim 13, 14 or 15, **characterised in that** the fixed bearing (54) is provided with fillers, which improves the sliding ability of the mounting.

17. A permanent magnet rotor according to claim 16, **characterised in that** graphite serves as a filler.

18. A permanent magnet rotor according to at least one of claims 12 to 17, **characterised in that** the fixed bearing (54) and the shaft (51) is manufactured in a two component injection moulding process, wherein the fixed bearing (54) and the shaft are composed of different plastics components.

19. An electric motor (10) with a wound stator (40) and the permanent magnet rotor (52) according to at least one of the preceding claims.

20. An electric motor according to claim 19, **characterised in that** the ratio (L/A) of the air gap length (L) between permanent magnet rotor (50) and the stator (40) and the minimum distance (A) of the second region (532) between the shaft (51) and the permanent magnet (52) is greater than 1.

21. An electric motor according to claim 1 or 19, **characterised in that** the permanent magnet (52) has a first, radial magnetisation whose magnetic field cooperates with a stator magnetic field and a second, axial magnetisation which cooperates with a magnetic sensor fixed to the stator.

22. A centrifugal pump (100) with an electric motor (10) according to claim 1, 19 or 20, **characterised in that** the shaft (51) cooperates with a pump impeller (59).

23. A centrifugal pump according to claim 22, **characterised in that** the shaft (51) is in one piece with the pump impeller (59).

24. A centrifugal pump according to claim 22 or 23, **characterised in that** the centrifugal pump is a wet running pump (100).

25. A centrifugal pump according to claim 22, 23 or 24, **characterised in that** a longitudinal groove (58) is arranged between the axle and the shaft (51) and serves as a channel for a secondary fluid circuit for cooling electronic structural parts or a stator winding (41).

## Revendications

1. Rotor à aimant permanent (50) comprenant un arbre (51), un aimant permanent (52) cylindrique creux, et un moyen de liaison élastique (53) entre l'arbre (51) et l'aimant permanent (52), rotor
dans lequel l'aimant permanent (52) est agencé coaxialement autour de l'arbre (51), et le moyen de liaison élastique (53) est agencé, sur la périphérie de l'arbre, dans plusieurs premières zones dans lesquelles la distance entre l'arbre (51) et l'aimant permanent (52) est agrandie, et qui sont délimitées par des deuxièmes zones dans lesquelles la distance d'espacement entre l'arbre (51) et l'aimant permanent (52) est minimale mais non nulle,
**caractérisé en ce que** lesdites deuxièmes zones, dans lesquelles la distance d'espacement entre l'arbre (51) et l'aimant permanent (52) est minimale, sont dimensionnées de manière à autoriser une légère compensation de dilatation du matériau de l'arbre par rapport au matériau de l'aimant permanent, mais de manière à exclure une excursion spatiale plus grande que souhaitée de l'aimant permanent (52) par rapport à l'arbre ou à une pièce entourant l'aimant permanent à faible distance, et **en ce que** le moyen de liaison élastique (53) est agencé dans plusieurs rainures (511) parallèles à l'axe ou dans des rainures en forme de spirale ou de méandres autour de l'arbre (51).

2. Rotor à aimant permanent selon la revendication 1, **caractérisé en ce que** le moyen de liaison (53) est une colle élastique.

3. Rotor à aimant permanent selon la revendication 2, **caractérisé en ce que** la colle renferme un silicone ou est constituée de silicone.

4. Rotor à aimant permanent selon la revendication 3, **caractérisé en ce que** le nombre de rainures (511) est différent de la moitié ou différent du nombre entier de pôles de l'aimant permanent.

5. Rotor à aimant permanent selon la revendication 3 ou la revendication 4, **caractérisé en ce que** le nombre des rainures (511) est différent du nombre des ailettes (591) d'une roue à ailettes de pompe.

6. Rotor à aimant permanent selon la revendication 3, 4 ou la revendication 5, **caractérisé en ce que** le nombre des rainures (511) est supérieur ou égal à trois.

7. Rotor à aimant permanent selon la revendication 3, 4, 5 ou la revendication 6, **caractérisé en ce que** les rainures sont réparties selon des distances d'espacement régulières le long de la périphérie de l'arbre (51).

8. Rotor à aimant permanent selon l'une au moins des revendications précédentes, **caractérisé en ce que** le moyen de liaison élastique (53) est réparti sur la totalité de la longueur de l'aimant permanent (52).

9. Rotor à aimant permanent selon l'une au moins des revendications précédentes, **caractérisé en ce que** l'aimant permanent est un aimant de ferrite.

10. Rotor à aimant permanent selon l'une au moins des revendications précédentes, **caractérisé en ce que** l'arbre est réalisé en une matière plastique pouvant être transformée par une technique de moulage par injection.

11. Rotor à aimant permanent selon l'une au moins des revendications précédentes, **caractérisé en ce que** l'arbre (51) est un arbre creux, qui est monté en rotation sur un axe (49).

12. Rotor à aimant permanent selon l'une au moins des revendications précédentes, **caractérisé en ce que** le rotor à aimant permanent (50) est lié de manière fixe en rotation à un palier fixe (54).

13. Rotor à aimant permanent selon la revendication 12, **caractérisé en ce que** le palier fixe (54) est réalisé en une matière plastique pouvant être transformée par une technique de moulage par injection, et est assemblé au rotor à aimant permanent (50) par moulage primaire.

14. Rotor à aimant permanent selon la revendication 12 ou la revendication 13, **caractérisé en ce que** le palier fixe (54) et un arbre (51) du rotor à aimant permanent (50) sont réalisés en une même matière ou en une matière différente.

15. Rotor à aimant permanent selon la revendication 13 ou la revendication 14, **caractérisé en ce que** le palier fixe (54) est réalisé en une matière plastique plus résistante à l'abrasion que l'arbre (51).

16. Rotor à aimant permanent selon la revendication 13, 14 ou la revendication 15, **caractérisé en ce que** le palier fixe (54) est doté de matériaux de charge, qui améliorent la capacité de glissement du système de palier.

17. Rotor à aimant permanent selon la revendication 16, **caractérisé en ce que** du graphite sert de matériau de charge.

18. Rotor à aimant permanent selon l'une au moins des revendications 12 à 17, **caractérisé en ce que** le palier fixe (54) et l'arbre (51) sont fabriqués selon un procédé de moulage par injection bi-composants, le palier fixe (54) et l'arbre étant constitués de composants de matière plastique différents.

19. Moteur électrique (10) comprenant un stator (40) à enroulements et le rotor à aimant permanent (52) selon l'une au moins des revendications précédentes.

20. Moteur électrique selon la revendication 19, **caractérisé en ce que** le rapport (L/A) de la longueur d'entrefer (L) entre le rotor à aimant permanent (50) et le stator (40) et la distance minimale (A) de la deuxième zone (532) entre l'arbre (51) et l'aimant permanent (52), est supérieur à 1.

21. Moteur électrique selon la revendication 1 ou la revendication 19, **caractérisé en ce que** l'aimant permanent (52) présente une première magnétisation radiale, dont le champ magnétique interagit avec un champ magnétique du stator, et une deuxième magnétisation axiale, qui interagit avec un capteur magnétique fixe avec le stator.

22. Pompe centrifuge (100) comprenant un moteur électrique (10) selon la revendication 1, 19 ou la revendication 20, **caractérisée en ce que** l'arbre (51) interagit avec une roue à ailettes de pompe (59).

23. Pompe centrifuge selon la revendication 22, **caractérisée en ce que** l'arbre (51) est réalisé d'un seul tenant avec la roue à ailettes de pompe (59).

24. Pompe centrifuge selon la revendication 22 ou la revendication 23, **caractérisée en ce que** la pompe centrifuge est une pompe à rotor noyé (100).

25. Pompe centrifuge selon la revendication 22, 23 ou la revendication 24, **caractérisée en ce qu'**entre l'axe et l'arbre (51), est agencée une rainure longitudinale (58), qui sert de canal pour un circuit de liquide secondaire destiné au refroidissement de composants électroniques ou d'un enroulement de stator (41).
